# EUROPÄISCHE PATENTANMELDUNG

(11) **EP 1 114 748 A2**
(43) Veröffentlichungstag der Anmeldung: **11.07.2001**
(21) Anmeldenummer: 00128289.6
(22) Anmeldetag: 22.12.2000
(51) Int. Cl.: B60Q 1/24

(54) **Beleuchtungsvorrichtung**

(30) Priorität: 07.01.2000 DE 10000422; 11.05.2000 DE 20008502 U
(71) Anmelder: Dominik, Hans, 72461 Albstadt (DE)
(72) Erfinder: Dominik, Hans, 72461 Albstadt (DE)
(74) Vertreter: Möbus, Daniela, Dr.-Ing.

(57) **Zusammenfassung**

Eine Beleuchtungsvorrichtung (11, 20, 32), insbesondere für Nutzfahrzeuge (10, 30), mit mindestens einer Lampe (12, 35), wobei die Lampe (12, 35) auf einem über die seitliche Fahrzeugbegrenzung hinaus ausfahrbaren Träger (14, 21) angeordnet ist.

## Beschreibung

Beim Be- und Entladen insbesondere von Nutzfahrzeugen während der Dunkelheit sind bisher nur Beleuchtungsvorrichtungen an Fahrzeugen bekannt, die nur einen kleinen Bereich des Betätigungsfeldes beleuchten. Deshalb ist das Be- und Entladepersonal zusätzlich auf weitere Lichtquellen wie z. B. Taschenlampen angewiesen.

Die Erfindung hat deshalb die Aufgabe, eine Beleuchtungsvorrichtung, insbesondere für Nutzfahrzeuge, dahin gehend zu verbessern, dass zukünftig auf zusätzliche Lichtquellen verzichtet werden kann.

Die Erfindung löst die gestellte Aufgabe durch eine Beleuchtungsvorrichtung, insbesondere für Nutzfahrzeuge, mit mindestens einer Lampe, bei der die Lampe auf einem über die seitliche Fahrzeugbegrenzung hinaus ausfahrbaren Träger angeordnet ist. Dadurch, dass die Lampe bei der erfindungsgemäßen Beleuchtungsvorrichtung einen relativ großen Abstand zum Fahrzeug aufweist, kann sie einen verhältnismäßig großen Lichtkegel produzieren, wodurch ein vergleichsweise großes Betätigungsfeld zum Be- und Entladen ausgeleuchtet wird. Um die Beleuchtungswirkung der Beleuchtungsvorrichtung noch besser nutzen zu können, kann die Lampe beispielsweise eine Halogenbirne aufweisen. Da die Rückfahrscheinwerfer bei Nutzfahrzeugen nur eine relativ geringe Ausleuchtung des Bereichs hinter dem Fahrzeug gewährleisten, kann die erfindungsgemäße Beleuchtungsvorrichtung auch heim Rückwärtsfahren in der Dunkelheit zusätzlich Helligkeit in einem größeren Bereich hinter und neben dem Fahrzeug sicherstellen (Lichtkorridor neben dem Fahrzeug). Grundsätzlich ist es besonders vorteilhaft, wenn zwei erfindungsgemäße Beleuchtungsvorrichtungen an beiden Seiten des Fahrzeugs die Fahrzeugumgebung beleuchten.

Wenn die Beleuchtungsvorrichtung am vorderen Ende eines Fahrzeugaufbaus angeordnet ist, kann sie gleichzeitig den Seitenbereich und den hinteren Bereich des Fahrzeugs ausleuchten.

Um die Lampen der Beleuchtungsvorrichtung möglichst weit weg vom Fahrzeug positionieren zu können, damit sie einen möglichst großen Lichtkegel bilden können, kann der Träger schwenkbar, ausklappbar und/oder teleskopartig ausfahrbar sein.

Um eine Blendung des Straßenverkehrs zu vermeiden, kann die Beleuchtungsvorrichtung einen Blendschutz aufweisen, der vorzugsweise als parallel zueinander angeordnete Lamellen ausgebildet ist. Durch diese parallel zueinander angeordneten Lamellen, die auch verstellbar sein können, kann eine genaue Eingrenzung des auszuleuchtenden Raums erzielt und somit eine ungewollte Blendung, beispielsweise des Straßenverkehrs, vermieden werden.

Auf dem Träger kann auch zusätzlich mindestens ein Rückspiegel und/oder eine Kamera montiert sein, der oder die dem Fahrer eines Sattelschleppers beispielsweise beim Rückwärtsfahren um eine Kurve eine bessere Sicht nach hinten ermöglicht.

Außerdem kann an dem Träger, vorzugsweise an ihrem äußeren Ende, eine Warnleuchte angebracht sein, die sofort zu blinken anfängt, sobald der Träger nach außen gefahren wird. Durch das Warnblinklicht wird der vorbeifahrende Verkehr darauf hingewiesen. einen seitlichen Sicherheitsabstand zu dem auskragenden Träger zu halten.

Außerdem kann am Träger - vorzugsweise an seiner Spitze - ein Abstandssensor oder Abstandsschalter angeordnet sein, der bei einer drohenden Kollision mit einem Gegenstand für ein sofortiges Einfahren oder Einschwenken des Trägers sorgt.

Um die Beleuchtungsvorrichtung zu schützen und um den Luftwiderstandsbeiwert möglichst niedrig zu halten, kann die Beleuchtungsvorrichtung in einem vorzugsweise aerodynamisch ausgebildeten Schutzgehäuse mindestens teilweise untergebracht sein.

Damit der Fahrer des Fahrzeugs auch bei Dunkelheit sicher zu seinem Fahrzeug gelangen kann, kann die mindestens eine Lampe über eine Funkfernbedienung, die beispielsweise im Zündschlüssel untergebracht ist, ein- und ausschaltbar sein.

Vorteilhaft ist es auch, wenn die mindestens eine Lampe der Beleuchtungsvorrichtung an eine Alarmanlage angeschlossen ist. sodass bei einem möglichen Einbruch in das Fahrzeug, das Fahrzeug über seine ganze Länge hell erleuchtet wird und somit der Einbrecher in die Flucht geschlagen wird.

Um die Beleuchtungsvorrichtung vom Führerhaus ausfahren zu können, kann der Träger elektrisch, pneumatisch oder hydraulisch bzw. auch manuell ausgefahren werden. Sie kann am vorderen Ende eines Fahrzeugsaufbaus oder am Heck in einer unteren, oberen oder mittleren Position angeordnet sein.

Die erfindungsgemäße Beleuchtungsvorichtung eignet sich für alle Arten von Nutzfahrzeugen. Besonders vorteilhaft ist ihre Anordnung an LKWs, Kommunal- und Rettungsfahrzeugen sowie an Fahrzeugen mit Sonderaufbauten.

Nachfolgend wird ein Ausführungsbeispiel der erfindungsgemäßen Beleuchtungsvorrichtung anhand der beiliegenden Zeichnung näher erläutert.

Im Einzelnen zeigen:
- Fig. 1a: eine Vorderansicht auf ein Fahrzeug mit einer erfindungsgemäßen Beleuchtungsvorrichtung;
- Fig. 1b: eine der Fig. la entsprechende Ansicht des Fahrzeugs in einem anderen Betriebszustand der Beleuchtungsvorrichtung;
- Fig. 2a: eine Vorderansicht auf ein Fahrzeug mit einer zweiten Ausführungsform einer Beleuchtungsvorrichtung;
- Fig. 2b: eine der Fig. 2a entsprechende Ansicht des Fahrzeugs mit einem anderen Betriebszustand der Beleuchtungsvorrichtung;
- Fig. 3: eine Seitenansicht auf einen Sattelschlepper mit einer dritten Ausführungsform einer Beleuchtungsvorrichtung;
- Fig. 4a: eine Vorderansicht auf eine Lampe mit Blendschutz einer Beleuchtungsvorrichtung;
- Fig. 4b: eine Draufsicht auf die Lampe aus Fig. 4a;
- Fig. 5: eine Vorderansicht auf ein Fahrzeug mit einer dritten Ausführungsform einer Beleuchtungsvorrichtung;
- Fig. 6: eine Seitenansicht auf die Beleuchtungsvorrichtung aus Fig. 5.

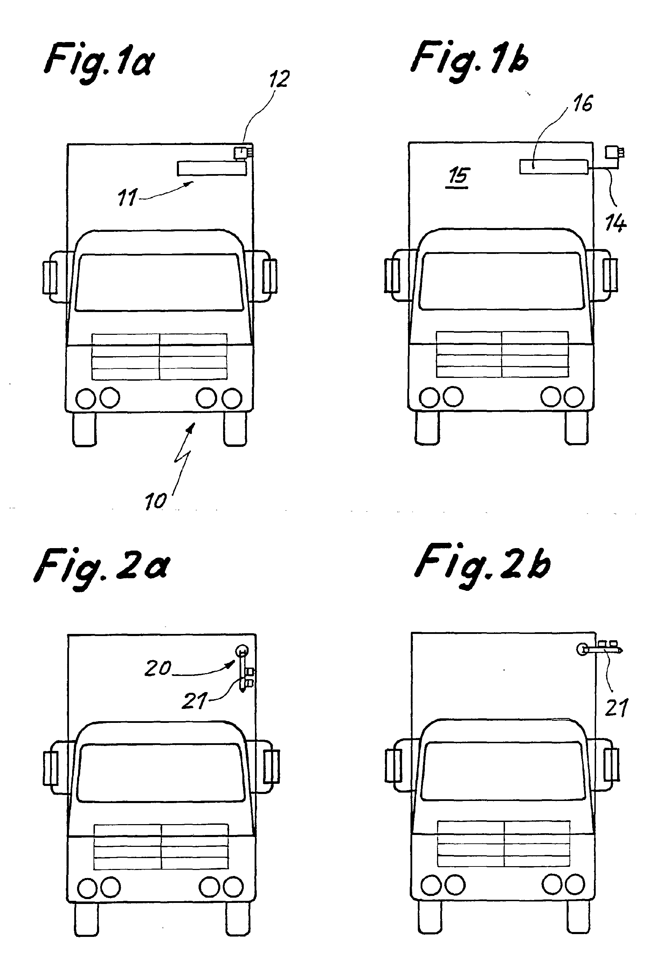

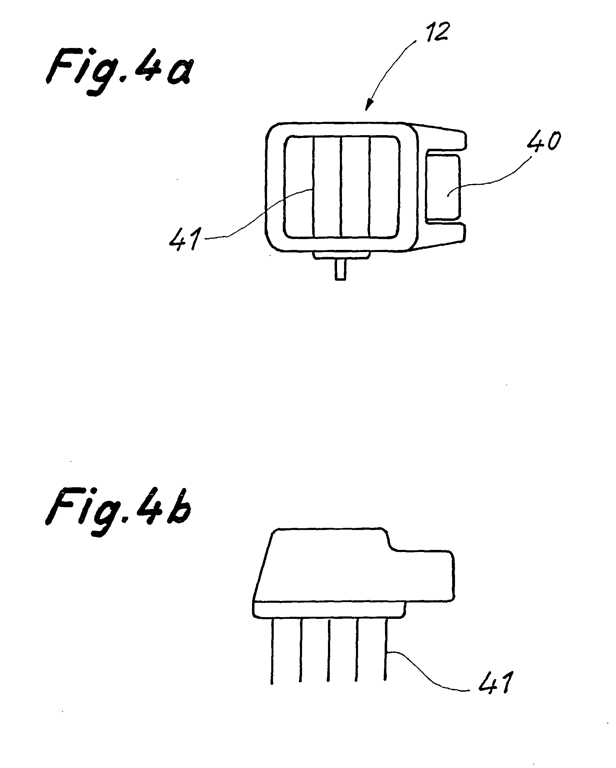

Fig. 1a zeigt ein Fahrzeug 10 mit einer Beleuchtungsvorrichtung 11. An der Beleuchtungsvorrichtung 11 ist eine Lampe 12 mit einer Warnleuchte 40 (Fig. 4a) angebracht. Sobald nun die Beleuchtungsvorrichtung 11 über die seitliche Fahrzeugbegrenzung hinaus ausgefahren wird (Fig. 1b), beginnt die Warnleuchte 40 zu blinken, um den vorbeifahrenden Verkehr vor einer Kollision mit der seitlich überstehenden Beleuchtungsvorrichtung 1.1 zu warnen. Sobald ein die Lampe 12 haltender, von einer Abdeckung 16 geschützter Träger 14 ausgefahren ist (Fig. 1b), wird die Lampe 12 eingeschaltet. Sie beleuchtet dann den gesamten seitlichen Bereich des Fahrzeugs und auch dessen Rückbereich. Somit ist bei Dunkelheit der gesamte seitliche Bereich hell erleuchtet, sodass das Bedienpersonal das Fahrzeug bei optimalen Lichtverhältnissen be- und entladen kann. Da die Lampe 12 auch den Riickhereich des Fahrzeugs beleuchtet, bietet diese dem Fahrer beim Rückwärtsfahren zosätzliche Sicherheit. Vorteilhafterweise ist die Beleuchtungsvorrichtung 11 links und rechts am vorderen Ende eines Fahrzeugaufbaus 15 angeordnet und der Träger 14 als Teleskopstange ausgebildet. Es ist jedoch auch möglich, das Fahrzeug 10 mit einer schwenkbaren Beleuchtungsvorrichtung 20 auszustatten (Fig. 2a und 2b). Ein Träger 21 wird dann zum Ausleuchten des Seiten- und Rückbereichs des Fahrzeugs nach oben geschwenkt (Fig. 2b).

Um zu verhindern, dass seitlich am Fahrzeug vorbeifahrender Autoverkehr von der Lampe 12 geblendet wird, kann diese mit einem Blendschutz, der vorzugsweise als parallel zueinander angeordnete Lamellen 41 ausgebildet ist, versehen sein (Fig. 4a und 4b). Besonders vorteilhaft ist es auch, wenn die außen angeordneten Lamellen eine Neigung nach innen gegen die anderen Lamellen besitzen. Diese Lamellen 41 können um die Vertikale verschwenkt werden, sodass mit ihnen eine gezielte Ausleuchtung des Bereichs um das Fahrzeug herum möglich ist. Somit kann eine Blendung beispielsweise des Straßenverkehrs vermieden werden.

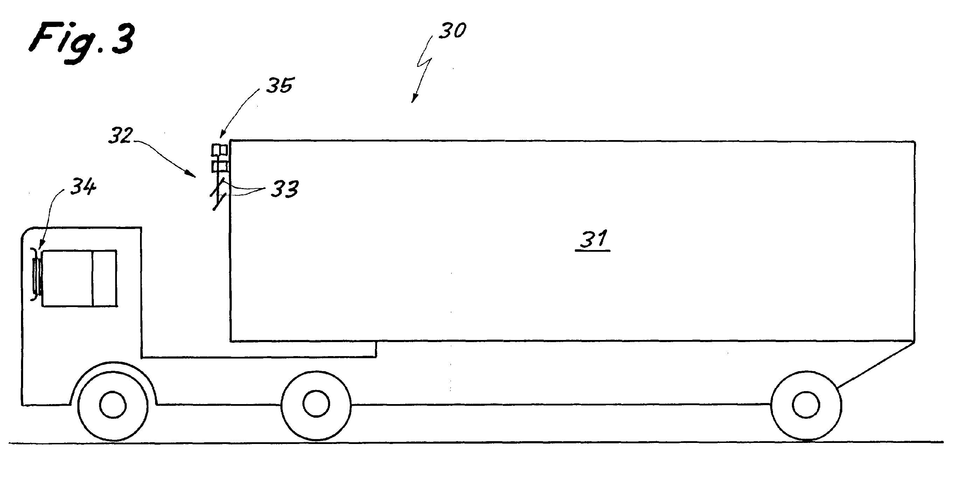

Fig. 3 zeigt einen Sattelschlepper 30 mit einem Anhanger 31, an dessen vorderem Ende eine Beleuchtungsvorrichtung 32 mit zwei Spiegeln 33 angebracht ist. Beim Rückwärtsfahren um eine Kurve kann der Fahrer mittels seines am Führerhaus angebrachten Rückspiegels 34 in die ebenfalls an einem hier nicht näher erkennbaren Träger seitlich ausfahrbaren Spiegel 33 schauen und somit besser nach hinten sehen, wobei. eine Lampe 35 den rückwärtigen Fahrzeugbereich bei Dunkelheit ausleuchtet. Alternativ oder zusätzlich zu den Spiegeln 33 kann auch eine hier nicht dargestellte Kamera vorgesehen sein.

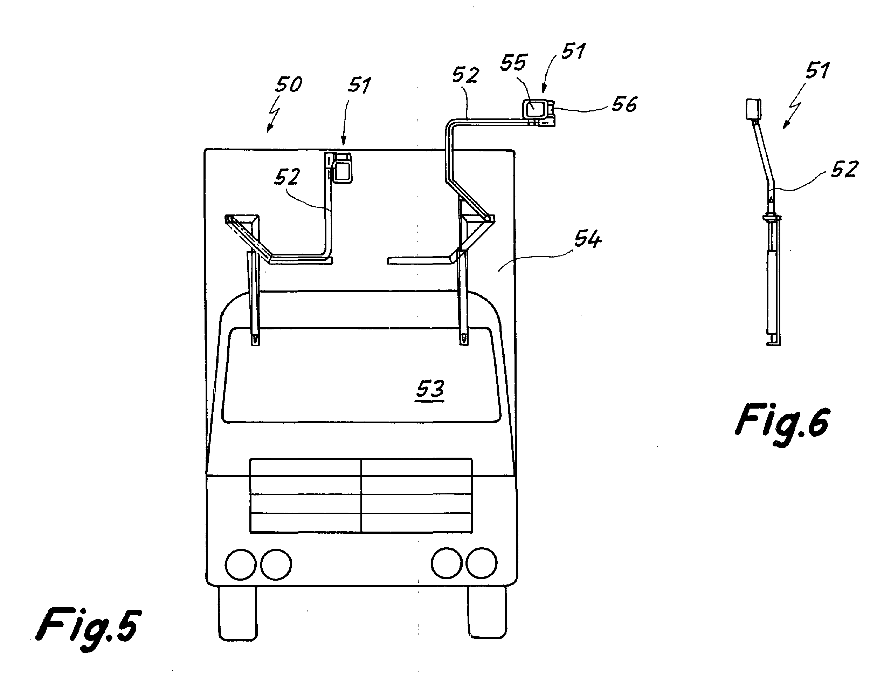

Fig. 5 zeigt einen LKW 50 mit zwei Beleuchtungseinrichtungen 51, die hier an abgewinkelten Trägern 52 schwenkbar zwischen einem Fahrerhaus 53 und dem LKW-Aufbau 54 des LKWs 50 angeordnet sind. Die Beleuchtungseinrichtung 51 besteht aus einem nach hinten gerichteten Scheinwerfer 55 und ggf. einer Kamera sowie einer äußeren, blinkenden Warnleuchte 56. Die Warnleuchte 56 sorgt dafür, dass vorbeifahrender Verkehr nicht zu dicht an das Fahrzeug herankommt. In der ausgeschwenkten Position ist der Scheinwerfer 55 seitlich und oberhalb des Fahrzeugaufbaus 54 angeordnet, sodass sein Lichtkegel einen großen Raum ausstrahlen kann. Im eingeklappten Zustand, der auf der linken Seite von Fig. 5 gezeigt ist, liegt die gesamte Einrichtung 51 vor dem Fahrzeugaufbau 54, sodass sie erstens geschützt ist und zweitens beim Fahren keine störenden Windgeräusche erzeugt.

Wie aus Fig. 6 zu sehen ist, ist der rechtwinklig abgebogene Arm 52 in seinem vorderen Bereich außerdem leicht zum Fahrerhaus 53 hin abgebogen.

## Patentansprüche

1. Beleuchtungsvorrichtung (11, 20, 32), insbesondere für Nutzfahrzeuge (10, 30), mit mindestens einer Lampe (1.2, 35), dadurch gekennzeichnet, dass die Lampe (12, 35) auf einem über die seitliche Fahrzeugbegrenzung hinaus ausfahrbaren Träger (14, 21) angeordnet ist.

2. Beleuchtungsvorrichtung (11, 20, 32) nach Anspruch 1, dadurch gekennzeichnet, dass der Träger (14, 21) schwenkbar und/oder teleskopartig ausfahrbar ist.

3. Beleuchtungsvorrichtung (11, 20, 32) nach Anspruch 1 oder 2, dadurch gekennzeichnet, dass sie einen Blendschutz aufweist.

4. Beleuchtungsvorrichtung (11, 20, 32) nach Anspruch 3, dadurch gekennzeichnet, dass der Blendschutz von parallel zueinander angeordneten Lamellen (40) gebildet ist, die vor dem Lampenglas oder im Lampeninneren angeordnet sind.

5. Beleuchtungsvorrichtung (32) nach einem der Ansprüche 1 bis 4, dadurch gekennzeichnet, dass auf dem Träger (14) zusätzlich mindestens ein Rückspiegel (33) und/oder mindestens eine Kamera angeordnet ist.

6. Beleuchtungsvorrichtung (11, 20, 32) nach einem der Ansprüche 1 bis 5, dadurch gekennzeichnet, dass auf dem Träger (14) zusätzlich eine Warnleuchte (40) angeordnet ist.

7. Beleuchtungsvorrichtung (11, 20, 32) nach einem der Ansprüche 1 bis 6, dadurch gekennzeichnet, dass sie in einem vorzugsweise aerodynamisch ausgebildeten Schutzgehäuse (16) mindestens teilweise untergebracht ist.

8. Beleuchtungsvorrichtung (11, 20, 32) nach einem der Ansprüche 1 bis 7, dadurch gekennzeichnet, dass die mindestens eine Lampe (12, 35) über eine Funkfernbedienung ein- und ausschaltbar ist.

9. Beleuchtungsvorrichtung (11, 20, 32) nach einem der Ansprüche 1 bis 8, dadurch gekennzeichnet, dass die mindestens eine Lampe (12, 35) an eine Alarmanlage angeschlossen ist.

10. Beleuchtungsvorrichtung (11, 20, 32) nach einem der Ansprüche 1 bis 9, dadurch gekennzeichnet, dass der Träger (14) manuell, elektrisch, pneumatisch oder hydraulisch ausfahrbar ist.

11. Beleuchtungsvorrichtung (11, 20, 32) nach einem der Ansprüche 1 bis 10, dadurch gekennzeichnet, dass sie am vorderen Ende eines Fahrzeugaufbaus (15, 31) angeordnet ist.
